# EUROPEAN PATENT APPLICATION

(11) **EP 4 124 372 A1**
(43) Date of publication of application: **01.02.2023**
(21) Application number: 21188243.6
(22) Date of filing: 28.07.2021
(51) Int. Cl.: B01D 1/28, C02F 1/04

(54) **AN ENERGY SYSTEM COMPRISING A MECHANICAL VAPOR RECOMPRESSION (MVR) SUBSYSTEM AND A METHOD FOR PRODUCING ENERGY**

(71) Applicant: Aquafair AB, 702 18 Örebro (SE)
(72) Inventor: ÅHRSTRÖM, Bert-Olof, Örnsköldsvik (SE); CARLMAN, Fredrik, Örebro (SE)
(74) Representative: Bjerkén Hynell KB

(57) **Abstract**

An energy system (1, 1', 1") comprising a mechanical vapor recompression (MVR) subsystem (3) is disclosed. The MVR-subsystem (3) is arranged to receive a liquid and is arranged to produce compressed vapor from the liquid and to heat the liquid being received. The energy system (1, 1', 1") comprises a heat subsystem (5, 5', 5") connected to the MVR-subsystem (3), which heat subsystem (5, 5', 5") is arranged to use a apportion of the compressed vapor and/or at least a portion of the liquid being heated to produce energy. A method for producing energy is also disclosed.

## Description

### Technical field

The present disclosure relates to an energy system comprising a mechanical vapor recompression (MVR) subsystem, in particular it relates to an energy system comprising MVR liquid purification subsystem. Further, the present disclosure relates to a method for producing energy using a MVR-subsystem.

### Background

Mechanical Vapor Recompression (MVR) is an evaporation method by which a blower, compressor or jet ejector is used to compress, and as a result of the compression, increase the pressure, density and temperature of the vapor produced.

As a result, the vapor can serve as the heating medium for its "mother" liquid or solution being concentrated. Without the compression, the vapor would be at the same temperature as its "mother" liquid/solution, and no heat transfer could take place.

Below some patent documents within the technical field will be briefly discussed. In the US 10793483 a system is described using a mechanical vapor recompression evaporator (MVR) to receive a liquid fraction from a centrifuge and evaporating the liquid fraction by mechanical vapor recompression to produce ammonia-laden water vapor and a concentrated nutrient slurry. The system comprises a dryer for drying the nutrient slurry to a selected moisture content to be available as an ingredient in compounded fertilizer; and an ammonia stripping tower assembly to receive ammonia-laden water vapor from the MVR and from it to precipitate ammonium sulphate salt and condense water as separate products.

In the EP2716341 a system and a method is described for liquid treatment by mechanical vapor recompression comprising a fixed fluid-tight evaporator housing. The housing comprises an inlet for feeding liquid to be evaporated into the housing and an outlet from the housing for liquid concentrated by evaporation and an outlet from the housing for discharging vapor boiled off from the liquid by evaporation. The housing comprises a plurality of heating elements within the housing mounted on a common horizontal axis, each of said heating elements having an outer surface for contact with said liquid to be evaporated within the housing and having an internal passage for heating medium and an element inlet and an element outlet for the heating medium.

In the EP3689449 a system for energy recycling using mechanical vapor recompression in combined chemical process is described.

Although the known systems work well, there is a need of improvements regarding utilization of energy in an efficient manner.

Thus, the general object of the present disclosure is to achieve an energy system comprising a mechanical vapor recompression (MVR) subsystem, which energy system has conditions for an improved utilization of energy from the MVR-subsystem. Further, an object of the present disclosure is to achieve an improved method for producing energy using a MVR-subsystem in an efficient manner.

### Summary

The above-mentioned objects are achieved by the present disclosure according to the independent claim.

Preferred embodiments are set forth in the dependent claims.

According to one aspect, the present disclosure relates to an energy system comprising a mechanical vapor recompression MVR subsystem arranged to receive a liquid and arranged to produce compressed vapor from said liquid and to heat the liquid being received. The energy system comprises a heat subsystem connected to the MVR-subsystem and arranged to use a portion of the compressed vapor and/or at least a portion of the liquid being heated to produce energy.

At least a portion of the liquid being heated means that the entire volume of the heated liquid can be used in the heat subsystem or a portion of the heated liquid can be used in the heat subsystem.

Because the energy system comprises the heat subsystem connected to the MVR-subsystem, a portion of energy produced by the MVR-subsystem can be used in the heat subsystem.

Thus, the heat subsystem can utilize a portion of energy produced by the MVR-subsystem by using the portion of the compressed vapor produced in the MVR-subsystem to produce energy, such as heat energy.

As an alternative, the heat subsystem can utilize a portion of energy produced by the MVR-subsystem by using at least the portion of the liquid being heated to produce energy, such as heat energy.

As a further alternative, the heat subsystem can utilize a portion of energy produced by the MVR-subsystem by using both the portion of the compressed vapor produced in the MVR-subsystem and at least the portion of the liquid being heated in the MVR-subsystem to produce energy, such as heat energy.

Thus, an energy system is provided, which system has conditions for utilization of a portion of energy produced in the MVR-subsystem in an efficient manner for producing energy that may be used, for example, in district heating, heating of buildings, used as energy storage or a similar use where a heat energy can be utilized. The produced energy may be heat energy.

Consequently, an improved energy system is provided, which energy system has conditions for an improved utilization of energy produced by a MVR-subsystem.

Therefore, the above mentioned object is achieved.

Optionally, the heat subsystem comprises at least one heat exchanger arranged to provide heat exchange between the portion of the compressed vapor and/or at least the portion of the liquid being heated and at least one heat medium of the heat subsystem flowing through the at least one heat exchanger.

Thus, the heat subsystem can utilize a portion of energy produced by the MVR-subsystem by using a first heat exchanger, of the at least one heat exchanger, providing a heat exchange between the portion of the compressed vapor and a first medium, of the at least one heat medium of the heat subsystem, which first medium flows through the first heat exchanger.

As an alternative, the heat subsystem can utilize a portion of energy produced by the MVR-subsystem by using a second heat exchanger, of the at least one heat exchanger, providing a heat exchange between at least the portion of the liquid being heated and a second medium of the at least one heat medium of the heat subsystem, which second medium flows through the second heat exchanger.

As a further alternative, the heat subsystem can utilize a portion of energy produced by the MVR-subsystem by using both the first heat exchanger and the second heat exchanger that can be arranged to heat exchange with the portion of the compressed vapor and at least the portion of the liquid being heated separately in the respective heat exchanger or in combination with each other using two different heating mediums or one common heating medium.

Optionally, heat subsystem is directly connected to the MVR-subsystem and is arranged to receive directly the portion of the compressed vapor and/or at least the portion of the liquid being heated.

Thus, the heat subsystem can utilize a portion of energy produced by the MVR-subsystem by using directly the portion of the compressed vapor.

As an alternative, the heat subsystem can utilize a portion of energy produced by the MVR-subsystem by using directly at least the portion of the liquid being heated.

As a further alternative, the heat subsystem can utilize a portion of energy produced by the MVR-subsystem by using directly both the portion of the compressed vapor and at least the portion of the liquid being heated.

Optionally, the MVR-subsystem is arranged as a closed loop vapor MVR-subsystem. Thus, vapor can be used in an efficient manner.

Optionally, the MVR-subsystem is a MVR liquid purification subsystem. Thus, an improved energy system is provided having conditions for producing pure liquid by means of the MVR-subsystem and for producing energy by means of the heat subsystem connected to the MVR-subsystem.

Optionally, the MVR liquid purification subsystem is a MVR water desalination subsystem.

Optionally, the liquid is water and the heated liquid is heated cleaned water. Thus, an yet improved energy system is provided having conditions for producing pure fresh water by means of the MVR-subsystem and for producing energy by means of the heat subsystem connected to the MVR-subsystem.

Optionally, the at least one heat medium is water.

According to a further aspect the present disclosure relates to a method for producing energy using an energy system comprising a mechanical vapor recompression (MVR) subsystem arranged to receive a liquid and arranged to produce compressed vapor from the liquid and to heat the liquid being received. The method comprises:
- connecting a heat subsystem to the MVR-subsystem and
- using a portion of the compressed vapor and/or at least a portion of the liquid being heated to produce energy, such as heat energy by the heat subsystem.

Because the heat subsystem is connected to the MVR-subsystem, a portion of energy produced by the MVR-subsystem can be used in the heat subsystem.

Thus, the heat subsystem can utilize a portion of energy produced by the MVR-subsystem by using the portion of the compressed vapor produced in the MVR-subsystem.

As an alternative, the heat subsystem can utilize a portion of energy produced by the MVR-subsystem by using at least the portion of the liquid being heated in the MVR-subsystem

As a further alternative, the heat subsystem can utilize a portion of energy produced by the MVR-subsystem by using both the portion of the compressed vapor and by using at least the portion of the liquid being heated.

Consequently, an improved method for producing energy is provided. Therefore, the above mentioned object is achieved.

Optionally, the method comprises:
- providing a heat exchange between the portion of the compressed vapor and/or at least the portion of the liquid being heated and at least one heat medium of the heat subsystem.

Optionally, the method comprises:
- providing a direct connection between the heat subsystem and the MVR-subsystem for direct supply of the portion of the compressed vapor and/or at least the portion of the liquid being heated to the heat subsystem.

### Brief description of the drawings

Fig. 1 shows a schematic illustration of an energy system according to some embodiments,
Fig. 2 shows a schematic illustration of an energy system according to some further embodiments,
Fig. 3 shows a schematic illustration of an energy system according to some yet further embodiments.

### Detailed description

The energy system with MVR-subsystem will now be described in detail with references to the appended figures. Throughout the figures the same, or similar, items have the same reference signs. Moreover, the ,items and the figures are not necessarily to scale, emphasis instead being placed upon illustrating the principles of the invention.

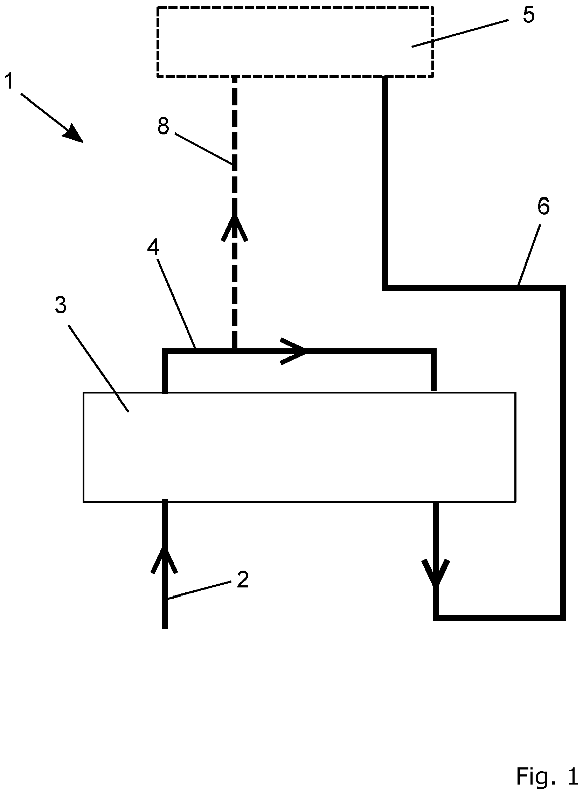

With reference to **Fig. 1****,** an energy system 1 comprising a mechanical vapor recompression MVR subsystem 3 is illustrated according to some embodiments.

The MVR-subsystem 3 is a common knowledge in the art and is therefore not described herein in details.

The energy system 1 comprises a mechanical vapor compression (MVR) subsystem 3. arranged to receive a liquid and arranged to produce compressed vapor from the liquid and to heat the liquid being received. The liquid is supplied to the MVR-subsystem 3 through a liquid supply line 2. The compressed vapor are transported through a compressed vapor line 4. The heated liquid is transported through a heated liquid line 6.

The liquid may be water or the liquid may be any other liquid or mixture of liquids and/or other materials e.g. solids, polymers, fatty alcohols, oils, additives, soluble or insoluble particles and molecular systems including ionic fluids. The heated liquid may then be a heated cleaned water. Thus, the MVR-subsystem 3 may be a MVR liquid purification subsystem, particularly a MVR water desalination subsystem.

According to the embodiments illustrated in Fig. 1, the energy system 1 comprises a heat subsystem 5connected to the MVR-subsystem 3 by means of the heated liquid line 6. The heat subsystem 5 is arranged to use the liquid being heated to produce energy, such as heat energy. The heat subsystem 5 is directly connected to said MVR-subsystem 3 by means of the heated liquid line 6.

As an alternative, the heat subsystem 5 can utilize a portion of energy produced by the MVR-subsystem 3 by using directly a portion of the compressed vapor. The portion of the compressed vapor can be supplied to the heat subsystem 5 through a compressed vapor portion line 8 illustrated with dashed line. Thus, the heat subsystem 5 can be directly connected to the MVR-subsystem 3 by means of the compressed vapor portion line 8 supplying the portion of the compressed vapor to the heat subsystem 5.

Consequently, a portion of energy produced by the MVR-subsystem 3 can be used by direct connection of the heat subsystem 5 to the MVR-subsystem according to the following alternatives:
- using the liquid being heated in the MVR-subsystem 3 and supplied to the heat subsystem 5 through the heated liquid line 6 or
- using the portion of the compressed vapor produced in the MVR-subsystem 3 and supplied through the compressed vapor portion line 8 or
- using both the liquid being heated in the MVR-subsystem 3 and supplied to the heat subsystem 5 through the heated liquid line 6 and using the portion of the compressed vapor produced in the MVR-subsystem 3 and supplied through the compressed vapor portion line 8.

According to some embodiments a portion of the heated liquid can be used by the heat subsystem 5.

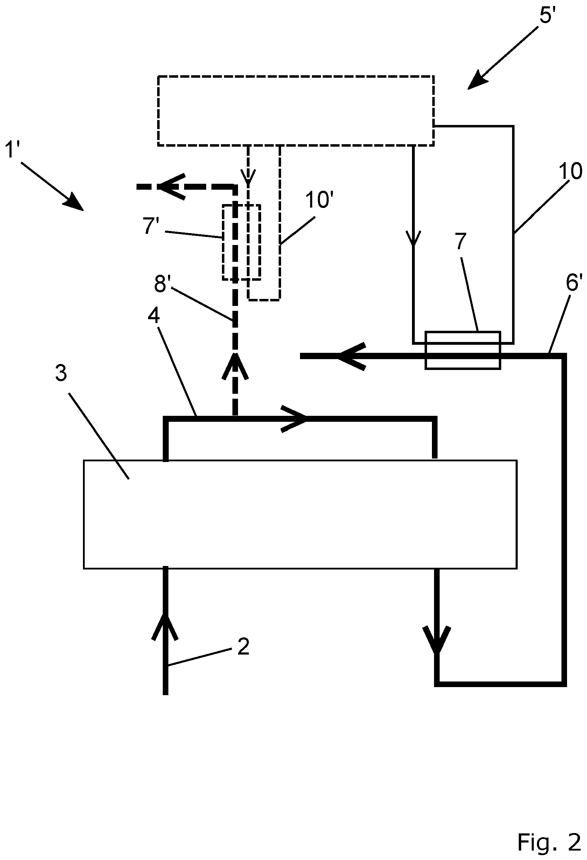

With reference to **Fig. 2****,** an energy system 1' comprising a mechanical vapor recompression (MVR) subsystem 3 and a heat subsystem 5'is illustrated according to further embodiments.

According to the embodiments illustrated in Fig. 2, the heat subsystem 5' comprises a heat exchanger 7 arranged to provide heat exchange between the liquid being heated in the MVR-subsystem 3 and transported through a further heated liquid line 6' and a heat medium of the heat subsystem 5' flowing via a heat medium line 10.

As an alternative, the heat subsystem 5'may comprises a further heat exchanger 7' arranged to provide heat exchange between the portion of the compressed vapor transported through a further compressed vapor portion line 8' and a further heat medium flowing via a further heat medium line 10'.

Consequently, a portion of energy produced by the MVR-subsystem 3 can be used by indirect connection of the heat subsystem 5' to the MVR-subsystem 3 by providing a heat exchange according to the following alternatives:
- arranging the heat subsystem 5' with the heat exchanger 7 arranged to provide heat exchange between the liquid being heated in the MVR-subsystem 3 and transported through a further heated liquid line 6' and the heat medium of the heat subsystem 5' flowing via the heat medium line 10 or
- arranging the heat subsystem 5' with the further heat exchanger 7' arranged to provide heat exchange between the portion of the compressed vapor transported through the further compressed vapor portion line 8' and the further heat medium flowing via the further heat medium line 10' or
- arranging the heat subsystem with the heat exchanger 7 arranged to provide heat exchange between the liquid being heated in the MVR-subsystem 3 and transported through a further heated liquid line 6' and the heat medium of the heat subsystem 5' flowing via a heat medium line 10 and with the further heat exchanger 7' arranged to provide heat exchange between the portion of the compressed vapor transported through the further compressed vapor portion line 8' and the further heat medium flowing via the further heat medium line 10'.

The heat medium and the further heat medium may be water or a medium comprising freon or ammonia or other suitable substances.

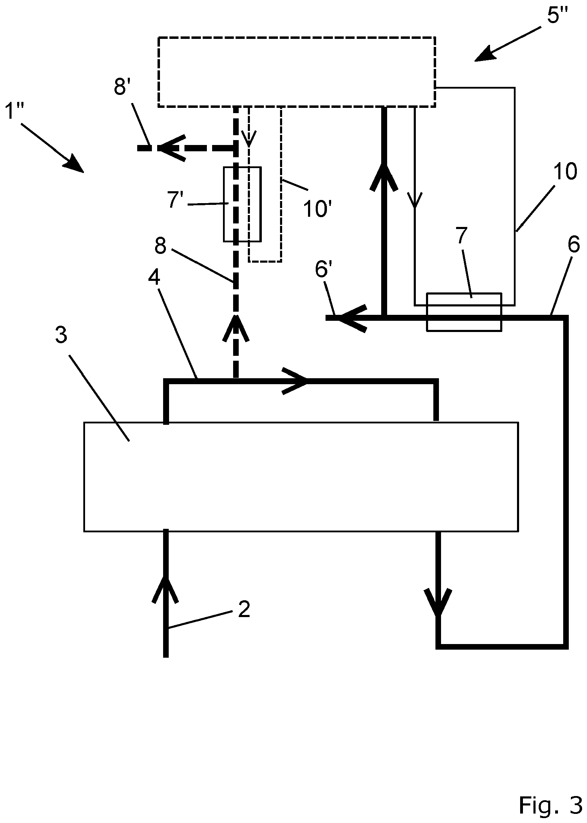

With reference to **Fig. 3** an energy system 1" comprising a mechanical vapor recompression MVR subsystem 3 and a heat subsystem 5" is illustrated according to some further embodiments.

According to the embodiments illustrated in Fig. 3 the energy system 1" is illustrated being a combination of the energy system 1 illustrated in Fig. 1 and the energy system 1' illustrated in Fig. 2. Thus, in Fig. 3 an energy system 1" is illustrated showing possible connections of the heat subsystem 5" to the MVR-subsystem 3 using possible direct and indirect connection alternatives described in conjunction to Fig. 1 and Fig. 2

The heat subsystems 5.5' and 5" may be a district heating system, a building heating system, an energy storage system or a similar system adapted for using heat energy for producing energy such as heat energy.

Through the application the arrows illustrate the flow direction in the respective line.

## Claims

**1.** An energy system (1, 1', 1") comprising a mechanical vapor compression (MVR) subsystem (3) arranged to receive a liquid and arranged to produce compressed vapor from said liquid and to heat the liquid being received,
**characterized in that**
the energy system (1, 1', 1") comprises a heat subsystem (5, 5', 5") connected to said MVR-subsystem (3) and arranged to use a portion of said compressed vapor and/or at least a portion of said liquid being heated to produce energy.

**2.** The energy system (1', 1") according to claim 1, wherein said heat subsystem (5', 5") comprises at least one heat exchanger (7, 7') arranged to provide heat exchange between said portion of the compressed vapor and/or at least said portion of said liquid being heated and at least one heat medium of said heat subsystem (5', 5") flowing through said at least one heat exchanger (7, 7').

**3.** The energy system (1, 1', 1") according to claim 1 or 2, wherein said heat subsystem (5, 5', 5") is directly connected to said MVR-subsystem (3) and is arranged to receive directly said portion of the compressed vapor and/or at least said portion of the liquid being heated.

**3.** The energy system (1, 1', 1") according to any of claims 1 to 3, wherein the MVR-subsystem (3) is arranged as a closed loop vapor MVR-subsystem.

**4.** The energy system (1, 1', 1") according to any of claim 1 or 4, wherein the MVR-subsystem (3) is a MVR liquid purification subsystem.

**5.** The energy system (1, 1', 1") according to claim 4, wherein the MVR liquid purification subsystem is a MVR water desalination subsystem.

**6.** The energy system (1, 1', 1") according to any of claims 1 to 5, wherein the liquid is water and the heated liquid is heated cleaned water.

**7.** The energy system (1, 1', 1") according to any of claims 2 to 6, wherein the at least one heat medium is water.

**9.** A method for producing energy using an energy system (1, 1', 1") comprising a mechanical vapor compression (MVR) subsystem (3) arranged to receive a liquid and arranged to produce compressed vapor from said liquid and to heat the liquid being received,
**characterized in that**
the method comprises:
- connecting a heat subsystem (5, 5', 5") to said MVR-subsystem (3) and
- using a portion of said compressed vapor and/or at least a portion of said liquid being heated to produce energy by the heat subsystem (5, 5', 5").

**10.** The method according to claim 9 comprising:
- providing a heat exchange between said portion of the compressed vapor and/or at least said portion of the liquid being heated and at least one heat medium of said heat subsystem (5', 5 ").

**11.** The method according to claim 9 or 10, comprising:
- providing a direct connection between the heat subsystem (5, 5', 5") and the MVR-subsystem (3) for direct supply of said portion of the compressed vapor and/or at least said portion of the liquid being heated to the heat subsystem (5, 5', 5").
